# EUROPEAN PATENT SPECIFICATION

(11) **EP 3 643 156 B1**
(45) Date of publication and mention of the grant of the patent: **24.11.2021**
(21) Application number: 18306381.7
(22) Date of filing: 23.10.2018
(51) Int. Cl.: A01D 25/02, A01B 15/04

(54) **INSERT FOR A SHARE FOR UPROOTING ROOT CROP, CORRESPONDING SET OF INSERTS, SHARE AND METHODS OF MANUFACTURE AND MAINTENANCE**
EINSATZ FÜR EIN SCHAR ZUM ENTWURZELN VON WURZELFRÜCHTEN, ENTSPRECHENDER SATZ VON EINSÄTZEN, SCHAR UND VERFAHREN ZUR HERSTELLUNG UND WARTUNG
INSERT DE SOC POUR LE DÉRACINEMENT DE TUBERCULES, ENSEMBLE CORRESPONDANT D'INSERTS, SOC ET PROCÉDÉS DE FABRICATION ET D'ENTRETIEN

(43) Date of publication of application: 29.04.2020
(73) Proprietor: Exel Industries, 51200 Epernay (FR)
(72) Inventor: RICHTER, Eduard, 93095 Hagelstadt/Gailsbach (DE)
(74) Representative: Lavoix

(56) References cited:
- WO-A1-2015/165934
- DE-A1- 10 218 778
- DE-A1-102013 104 836
- DE-B3-102017 210 780
- US-A- 1 169 229

## Description

The present invention concerns a share according to the preamble of claim 1. Shares for uprooting root crop, such as sugar beets are known from the state of the art.

Shares with inserts are for example known from DE10 2013 104 836. The share disclosed by this document comprises inserts having a roughly L-shape cross section and a rounded cutting edge. The inserts are however of complex shape, rather costly to manufacture and do still not satisfy the need of avoiding harming the roots during uprooting.

The objective of the invention is therefore to provide inserts and shares that are economic to manufacture and that allow high harvesting yield, in particular little loss of root crop mass during harvesting. A further objective of the invention is to provide corresponding methods that are economic.

In order to achieve at least one of the above objects the invention provides a share according to claim 1.

The invention also provides a method of manufacture a share according to claim 12 and a method of maintenance according to claim 13. According to specific embodiments, the share according to the invention car comprise one or more of the features of the dependent claims 2 to 11.

The invention relates also to a method of manufacture of a share according to at least an embodiment disclosed herein, comprising the steps of:
- providing the or each insert;
- providing the base body, and
- fixing the or each insert on the base body, in particular by soldering.

The invention relates also to a method of maintenance of a root crop harvesting machine comprising at least two share supports with worn uprooting shares, comprising the steps of:
- unmounting of the worn uprooting shares from the share supports;
- providing at least two replacement uprooting shares, each replacement uprooting share being a share according to an embodiment disclosed herein and being in a state of wear less than the worn shares;
- mounting the replacement uprooting shares onto the share supports.

The invention will be better understood in light of the following specification of an embodiment, which refers to the annexed figures showing:
- Figure 1 a side view of the active side of a share for uprooting beet crop;

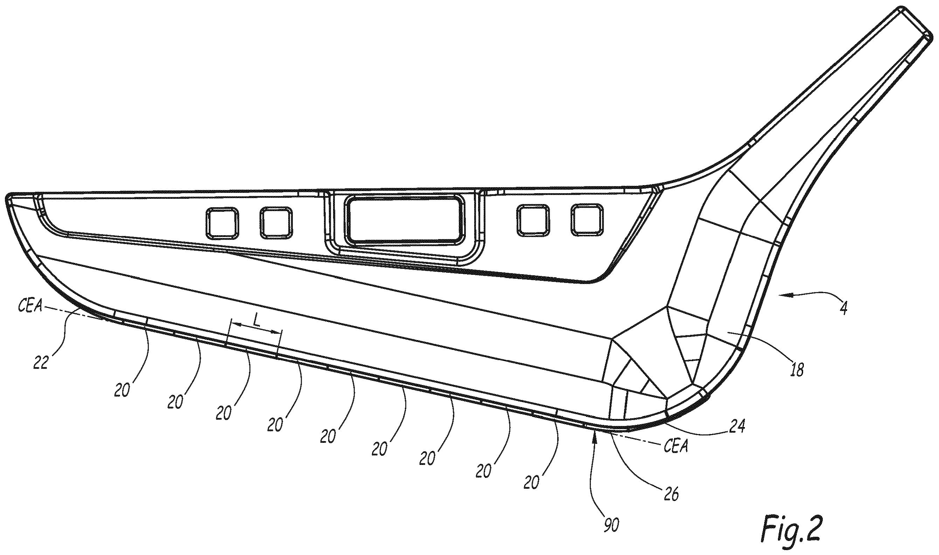

- Figure 2 a side view of the passive side of the share for uprooting beet crop of figure 1;

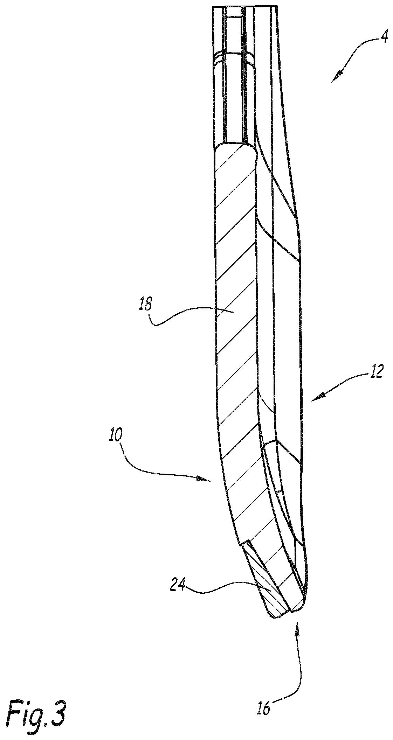

- Figure 3 a cut along line III-III of Figure 1;

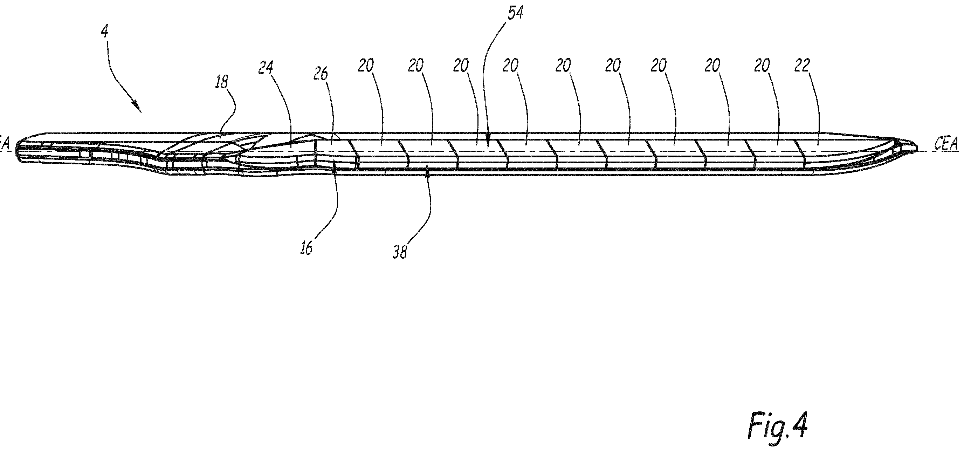

- Figure 4 a view of the lower side of the share for uprooting beet crop of Figure 1;
- Figure 5 a cross-cut along line V-V of Figure 1 and a portion of the support for the share of a harvesting machine; and
- Figure 6 the detail VI of Figure 5 in greater detail.

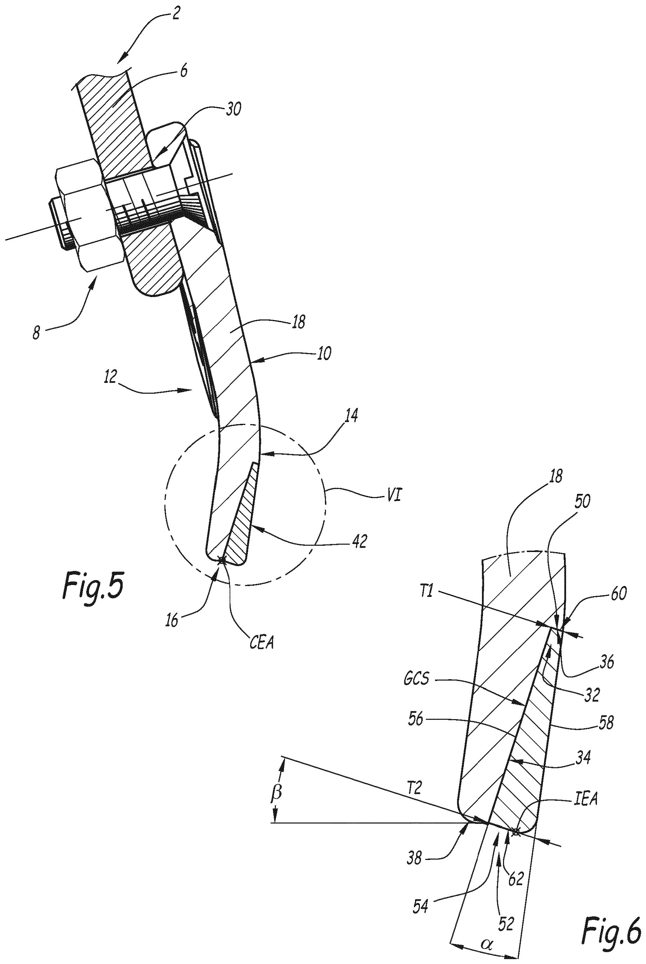

On Figure 5 is shown a portion of a harvesting machine 2, namely an uprooting share 4, a share support 6 and fixing means 8, in the present case nuts and bolts.

The harvesting machine 2 is adapted to uproot root crop, in particular beet crop, and specifically sugar beets. The harvesting machine 2 is as such known from the prior art and is for example of the Terra Dos type by Holmer Maschinenbau.

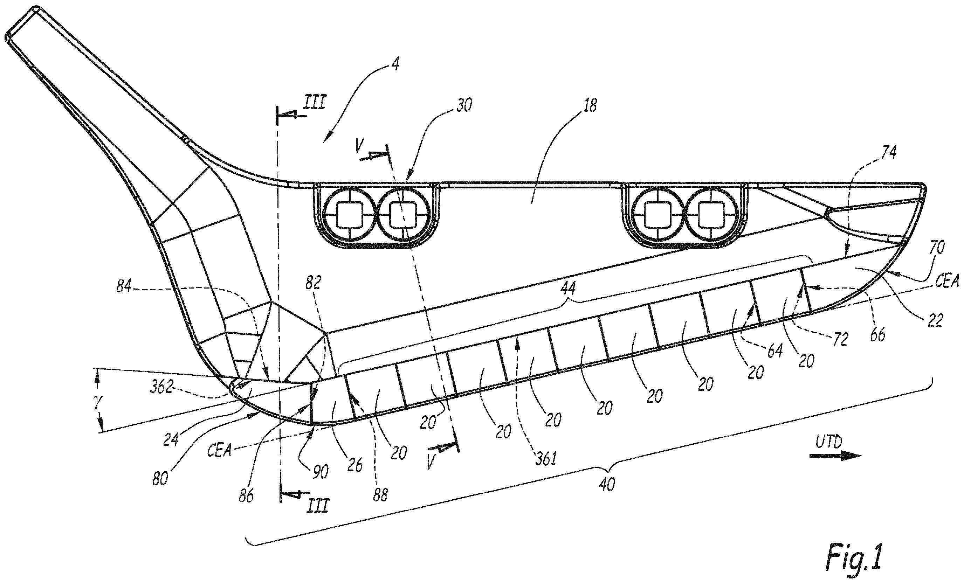

The harvesting machine 2 has an uprooting travel direction UTD, which is to the right on Figure 1.

The harvesting machine 2 comprises, for each working row of crop to be uprooted, a pair of uprooting shares 4 which is adapted to push the root crop out of the soil during advancement of the harvesting machine.

Only one uprooting share 4 is depicted and here below explained. The other uprooting share of the pair of uprooting shares is symmetrical to the uprooting share shown on the Figures with respect to a plane of symmetry parallel to the plane of Figure 1 and above the plane of Figure 1.

The uprooting share 4 has an active side 10 adapted to come into contact with the crop to be uprooted and a passive side 12, turned away from the crop to be uprooted.

The active side 10 forms a closed working surface 14 that is generally convex.

The uprooting share 4 has a cutting edge 16 for cutting into the soil and extending along a cutting edge axis CEA.

The uprooting share 4 comprises a base body 18, basic inserts 20, an upstream end insert 22, a downstream end insert 24 and a transitional insert 26.

The base body 18 comprises an attachment portion 30 for attachment of the uprooting share to the share support 6.

The base body 18 comprises also a step 32 or recess having a shape complementary to the shape of the inserts and adapted to receive the corresponding inserts 20, 22, 24, 26 (Figure 6). The step 32 is formed by a plane surface 34 that is inclined with respect to a corresponding surface of the passive side 12. The step 32 is shaped so that the thickness of the base body diminishes towards the cutting edge 16. The step 32 is also formed by a stop surface 36 perpendicular to the plane surface 34 and extending essentially parallel to the cutting edge axis.

The base body 18 comprises a base body edge face 38 extending along the cutting edge axis CEA.

The uprooting share 4 comprises in the present case nine of the basic inserts 20, one upstream end insert 22, one downstream end insert 24 and one transitional insert 26. The inserts form together a set of inserts 40. All the inserts 20, 22, 24, 26 of the set of inserts 40, when placed in succession adjacent one to another and as shown on the Figures form a continuous guiding surface 42 for guiding root crop on the uprooting share. For forming the guiding surface 42, the basic inserts 20 are placed in a succession 44 adjacent one to another, the upstream end insert 22 is placed at an upstream end of the succession 44 and the downstream end insert 24 is placed at a downstream end of the succession 44.

In the present case, the upstream end insert 22 is placed adjacent a basic insert 20 and the transitional insert 26 is interposed between the downstream end of the succession 44, adjacent a basic insert 20 and adjacent the downstream end insert 24. Generally, for forming the guiding surface 42, the transitional insert 26 can be arranged either between and adjacent to one of the basic inserts 20 and the upstream end insert 22 or between and adjacent to one of the basic inserts 20 and the downstream end insert 24. The transitional insert 26 is optional and can be omitted. In this case the upstream end insert 22 and the downstream end insert 24 are placed adjacent a basic insert 20.

Advantageously, each of the basic inserts 20 of the set of inserts 40 is identical. Each of the upstream end insert 22 and the downstream end insert 24 have a shape different from the shape of the basic insert 20. The transitional insert 26 has a shape different from the shape of basic insert 20, the upstream end insert 22 and the downstream end insert 24.

Each of the basic inserts 20 has a first end 50 adapted to form a portion remote from the cutting edge 16 of the uprooting share, and a second end 52 comprising an insert edge 54 extending along an insert edge axis IEA and adapted to form at least a portion of the cutting edge 16 of the uprooting share. The thickness of the insert 20, from the first end 50 to the second end 52 increases continuously and the second end 52 has a thickness T2 greater than a thickness T1 of the first end 50. The thickness is generally measured perpendicularly to a plane containing the insert edge axis.

The expression "remote from the cutting edge" is to be understood as opposed to the expression "forming a portion of the cutting edge".

Each of the basic inserts 20 has a generating cross section GCS, taken transversally or perpendicularly to the insert edge axis IAE, that is generally polygonal, in particular trapezoidal. In particular, as in the present case, the generating cross section GCS is over its whole circumference strictly convex. Alternatively, the generating cross section GCS could also be over its whole circumference strictly convex, except one single concave section.

Generally, the generating cross section GCS is identical over the whole length L or at least 90% of the length of the basic insert 20, measured along the insert edge axis IEA, of the insert.

In other words, the outer surface of each the basic insert 20 comprises a first side face 56, a second side face 58, a stop face 60 and an edge face 62. The first side face 56 and the second side face 58 are plane faces and are inclined one to another by an angle α preferably comprised between 8° and 12°. The first side face 56 is applied against the plane surface 34.

The stop face 60 and the edge face 62 are plane faces and are generally parallel one to another. The second side face and the edge face 62 are connected one to another by a fillet. The stop face and the edge face are generally perpendicular to the first side face.

The basic insert 20 comprises two end faces 64, 66 (Figure 1). The end faces 64, 66 are generally planar and in particular parallel one to another. The end faces 64, 66 extend transversally or perpendicularly to the insert edge axis and thus to the first side face 56, second side face 58, stop face 60 and edge face 62.

The basic insert 20 has therefore the general shape of a truncated wedge.

The upstream end insert 22 has, in a side view, a triangular shape having one arc-shaped edge 70.The upstream end insert 22 has an end face 72 mating with the end face 66 of the adjacent basic insert 20 and a face 74 mating with the stop surface 36 of the base body 18. The faces 72, 74 are preferably perpendicular one to another.

The downstream end insert 24 has, in a side view, a truncated triangular shape or trapezoidal shape having one arc-shaped edge 80. The downstream end insert 22 has a an end face 82 mating with the end face 86 (see below) of the adjacent transitional insert 26 and a face 84 mating with the stop surface 36 of the base body 18. The end face 82 and the face 84 are preferably perpendicular one to another.

More particularly, the stop face 36 is in the present case angled and comprises a main section 361 and a downstream section 362 extending at an angle one to another (see Figure 1). The main section 361 may be straight and the downstream section may also be straight. In the present case, the main section 361 and downstream section 362 form angle γ one with another, that is bigger than 0° and preferably comprised between 5° and 30°. Consequently, the most downstream portion of the downstream end insert 24 is offset away from the cutting edge axis CEA and is subject to little wear. Consequently, the downstream end insert 24 is not prone to detachment from the base body 18.

Generally, the downstream section 361 can be adjacent only the downstream end insert 24 or also adjacent to the transitional insert(s) 26.

Generally the share can be designed so that at least the downstream end insert 24 is adjacent and in contact with the downstream section 362 and at least one basic insert is adjacent and in contact with the main section 361.

The transitional insert 26 has, in a side view, an essentially trapezoidal shape. The transitional insert 26 has an end face 86, adjacent the downstream end insert 24, and an end face 88, adjacent a basic insert 20.

The transitional insert 26 has, in a side view, one arc-shaped edge 90. The arc-shaped edge 90 forms part of the cutting edge 16.

Generally, the uprooting share 4 has at least one insert fixed to the base body and forming at least a portion of the cutting edge. The insert can be either one of the basic inserts 20, the upstream end inserts 22 or the downstream end insert 24, or the transitional insert 26. Generally, the first end of the insert forms a portion of the insert remote from the cutting edge of the share, and the insert edge forms at least a portion of the cutting edge of the uprooting share.

The base body edge face 38 and the insert edge face 62 form together a concave profile. This profile is taken for example in a plane transversal or perpendicular to the cutting edge axis CEA and can be seen on figure 6. The body edge face 38 and the insert edge face 62 are arranged one to another according to an angle β bigger than 0° and at most 40°. Preferably, the angle β is comprised between 5° and 15° and advantageously comprised between 8° and 12°.

This concave profile allows for relatively little wear on the base body 18 and the inserts, as the edge face of the inserts protects the edge of the base body from contact with soil. Consequently, the transitional zone between the inserts and the base body is not "washed out" by soil.

At least one, preferably more of and particularly each of the basic inserts 20, upstream end insert 22, downstream end insert 24 and transitional insert 26 has a surface that is harder than the surface of the base body 18. The hardness of the base body 18, at least in a working zone near and adjacent the inserts, is comprised between 45HRC and 52HRC and preferably between 47HRC and 50HRC.

The corresponding insert can have a hardness between 60HRC to 80HRC and more preferably a hardness of 65HRC to 75HRC Each of the inserts is for example manufactures by sintering out of a pressed green body.

The uprooting share 4 is manufactured as follows. The or each of the basic inserts 20, the upstream end inserts 22, the downstream end insert 24, and optionally the transitional insert 26 are provided. The base body 14 is provided. Then the or each insert is fixed on the base body 14, in particular by soldering.

The invention relates also to a method of maintenance of a root crop harvesting machine comprising at least two share supports with worn shares. When the shares are worn they need to be replaced. The replacement method is as follows. The worn uprooting shares are unmounted from the share supports. Two replacement uprooting shares, each replacement uprooting share being an uprooting share as disclosed above and being in a state of wear less than the worn uprooting shares are provided. In particular the replacement uprooting shares are new uprooting shares. Finally, the replacement uprooting shares are mounted onto the share supports.

## Claims

1. Share for uprooting crop, in particular beet crop,
the share having a cutting edge (16) for cutting in the soil,
the share comprising:
- a base body, which comprises an attachment portion (30) adapted to attach the share to a support (6) of a harvesting machine,
- at least one basic insert (20, 22, 24, 26) fixed to the base body and forming al least a portion of the cutting edge, **characterized in that** the basic insert (20, 22, 24, 26) has a first end (50) forming a portion remote from the cutting edge (16) of the share, and a second end (52) comprising an insert edge (54) extending along an insert edge axis (IEA) and forming at least a portion of the cutting edge of the share, **in that** the thickness of the insert, from the first end to the second end increases continuously and the second end has a thickness (T2) greater than a thickness (T1) of the first end.

2. Share according to claim 1, wherein the insert has a generating cross section (GCS) taken transversally or perpendicularly to the insert edge axis, that is generally polygonal, in particular trapezoidal.

3. Share according to claim 1 or 2, wherein the generating cross section is identical over a whole length (L) or at least over 90% of the length measured along the insert edge axis of the insert and the insert comprises two end faces (64, 66), in particular parallel end faces, extending transversal to the insert edge axis.

4. Share for uprooting crop according to any one of the preceding claims, wherein
the share has a set of inserts (40),
the set of inserts comprising:
- at least two identical basic inserts (20),
- an upstream end insert (22) and
- a downstream end insert (24),
whereby each of the upstream end insert and the downstream end insert having a shape different from the shape of the basic inserts,
whereby all the inserts of the set of inserts, when placed in succession adjacent one to another are adapted to form a continuous guiding surface (42) for guiding root crop on a share for uprooting root crop, and wherein, for forming the guiding surface, the basic inserts are adapted to be placed in a succession adjacent one to another, the upstream end insert is adapted to be placed at an upstream end of the succession, the downstream end insert is adapted to be placed at a downstream end of the succession.

5. Share according to claim 4, wherein
the upstream end insert (22) and/or the downstream end insert (24), has/have a trapezoidal or triangular shape having one arc-shape edge (70, 80).

6. Share according to claim 4 or 5, wherein
the set of inserts comprises at least one transitional insert (26) having a shape different from the shape of the basic insert, the shape of the upstream end insert and the shape of the downstream end insert, and wherein
for forming the guiding surface, the transitional insert is adapted to be arranged between either one of the basic inserts and the upstream end insert or between one of the basic inserts and the downstream end insert.

7. Share for uprooting crop according to claim 6, wherein the transitional insert (26) has, in a side view, an essentially trapezoidal shape.

8. Share for uprooting crop according to any one of the preceding claims, wherein the cutting edge extends along a cutting edge axis (CEA).

9. Share for uprooting crop according to anyone of the preceding claims, wherein
- the base body comprises a base body edge face (38),
- the insert comprises an insert edge face (62),
- the base body edge face and the insert edge face form together a convex profile.

10. Share according to anyone of the preceding claims, wherein the or each insert (20, 22, 24, 26) comprises a surface that is harder than a surface of the base body, in particular the or each insert having a hardness between 60HRC and 80HRC and preferably between 65HRC and 75HRC.

11. Share according to anyone of the preceding claims, wherein the base body comprises a stop face (36), the stop face (36) being angled and comprising a main section (361) and a downstream section (362) extending at an angle one to another;
and at least the downstream end insert (24) being adjacent and in contact with the downstream section (362) and at least one basic insert being adjacent and in contact with the main section (361).

12. Method of manufacture of a share according to anyone of the preceding claims, comprising the steps of:
- providing the or each insert (20, 22, 24, 26);
- providing the base body (18), and
- fixing the or each insert on the base body, in particular by soldering.

13. Method of maintenance of a root crop harvesting machine comprising at least two share supports with worn uprooting shares, comprising the steps of:
- unmounting of the worn uprooting shares from the share supports;
- providing at least two replacement uprooting shares (4), each replacement uprooting share being a share according to anyone of the claims 1 to 11 and being in a state of wear less than the worn shares;
- mounting the replacement uprooting shares onto the share supports.

## Patentansprüche

1. Pflugschar zum Entwurzeln von Pflanzen, insbesondere von Rüben,
wobei die Pflugschar eine Schneidkante (16) zum Schneiden in dem Boden aufweist, die Pflugschar umfassend:
- einen Basiskörper, der einen Befestigungsabschnitt (30) aufweist, der dazu geeignet ist, die Pflugschar an einer Halterung (6) einer Erntemaschine zu befestigen,
- mindestens einen Basiseinsatz (20, 22, 24, 26), der an dem Basiskörper befestigt ist und mindestens einen Abschnitt der Schneidkante bildet, **dadurch gekennzeichnet, dass** der Basiseinsatz (20, 22, 24, 26) ein erstes Ende (50), das einen von der Schneidkante (16) der Pflugschar entfernten Abschnitt bildet, und ein zweites Ende (52), das eine Einsatzkante (54) umfasst, die sich entlang einer Einsatzkantenachse (IEA) erstreckt und mindestens einen Teil der Schneidkante der Pflugschar bildet, aufweist, wobei
die Stärke des Einsatzes von dem ersten Ende zu dem zweiten Ende kontinuierlich zunimmt und das zweite Ende eine Stärke (T2) aufweist, die größer ist als die Stärke (T1) des ersten Endes

2. Pflugschar nach Anspruch 1, **dadurch gekennzeichnet, dass** der Einsatz einen Erzeugungsquerschnitt (GCS) quer oder senkrecht zu der Einsatzkantenachse gemessen aufweist, der allgemein polygonal, insbesondere trapezförmig ist.

3. Pflugschar nach Anspruch 1 oder 2, wobei der Erzeugungsquerschnitt über eine gesamte Länge (L) oder zumindest über 90 % der entlang der Einsatzrandachse gemessenen Länge des Einsatzes identisch ist und der Einsatz zwei Stirnflächen (64, 66), insbesondere parallele Stirnflächen, umfasst, die sich quer zu der Einsatzrandachse erstrecken.

4. Pflugschar zum Entwurzeln von Pflanzen nach einem der vorherigen Ansprüche, wobei
die Pflugschar einen Satz von Einsätzen (40) aufweist,
der Satz von Einsätzen umfassend:
- mindestens zwei identische Basiseinsätze (20),
- einen stromaufwärtigen Endeinsatz (22) und
- einen stromabwärtigen Endeinsatz (24),
wobei der stromaufwärtige und der stromabwärtige Einsatz jeweils eine andere Form als die Basiseinsätze aufweisen,
wobei alle Einsätze des Satzes von Einsätzen, wenn sie in einer Abfolge nebeneinander angeordnet sind, geeignet sind, eine kontinuierliche Führungsfläche (42) zum Führen von Hackfrucht auf einer Pflugschar zum Entwurzeln von Hackfrucht zu bilden, und wobei zum Bilden der Führungsfläche die Basiseinsätze geeignet sind, in einer Abfolge nebeneinander angeordnet zu sein, der stromaufwärtige Endeinsatz geeignet ist, an einem stromaufwärtigen Ende der Abfolge angeordnet zu sein, der stromabwärtige Endeinsatz geeignet ist, an einem stromabwärtigen Ende der Abfolge angeordnet zu sein.

5. Pflugschar nach Anspruch 4, wobei
der stromaufwärtige Endeinsatz (22) und/oder der stromabwärtige Endeinsatz (24) eine trapezförmige oder dreieckige Form mit einem bogenförmigen Rand (70, 80) aufweist/aufweisen.

6. Pflugschar nach Anspruch 4 oder 5, wobei
der Satz von Einsätzen mindestens einen Übergangseinsatz (26) umfasst, der eine Form aufweist, die sich von der Form des Basiseinsatzes, der Form des stromaufwärtigen Endeinsatzes und der Form des stromabwärtigen Endeinsatzes unterscheidet, und wobei
der Übergangseinsatz zum Bilden der Führungsfläche angepasst ist, um entweder zwischen einem der Basiseinsätze und dem stromaufwärtigen Endeinsatz oder zwischen einem der Basiseinsätze und dem stromabwärtigen Endeinsatz angeordnet zu sein.

7. Pflugschar zum Entwurzeln von Pflanzen nach Anspruch 6, wobei der Übergangseinsatz (26) in einer Seitenansicht eine im Wesentlichen trapezförmige Form aufweist.

8. Pflugschar zum Entwurzeln von Pflanzen nach einem der vorherigen Ansprüche, wobei sich die Schneidkante entlang einer Schneidkantenachse (CEA) erstreckt.

9. Pflugschar zum Entwurzeln von Pflanzen nach einem der vorherigen Ansprüche, wobei
- der Basiskörper eine Basiskörper-Randfläche (38) aufweist,
- der Einsatz eine Einsatzrandfläche (62) umfasst,
- die Basiskörper-Randfläche und die Einsatzrandfläche zusammen ein konvexes Profil bilden.

10. Pflugschar nach einem der vorherigen Ansprüche, wobei der oder jeder Einsatz (20, 22, 24, 26) eine Oberfläche aufweist, die härter ist als eine Oberfläche des Basiskörpers, insbesondere wobei der oder jeder Einsatz eine Härte zwischen 60HRC und 80HRC und vorzugsweise zwischen 65HRC und 75HRC aufweist.

11. Pflugschar nach einem der vorherigen Ansprüche, wobei der Basiskörper Folgendes umfasst
eine Anschlagfläche (36), wobei die Anschlagfläche (36) abgewinkelt ist und einen Hauptabschnitt (361) und einen stromabwärtigen Abschnitt (362) aufweist, die sich in einem Winkel zueinander erstrecken;
und mindestens wobei der stromabwärtige Endeinsatz (24) an den stromabwärtigen Abschnitt (362) angrenzt und mit diesem in Kontakt ist und mindestens ein Basiseinsatz an den Hauptabschnitt (361) angrenzt und mit diesem in Kontakt ist.

12. Verfahren zum Herstellen einer Pflugschar nach einem der vorherigen Ansprüche, umfassend die folgenden Schritte:
- Bereitstellen des oder jeden Einsatzes (20, 22, 24, 26);
- Bereitstellen des Basiskörpers (18), und
- Befestigen des oder jeden Einsatzes auf dem Basiskörper, insbesondere durch Schweißen.

13. Verfahren zum Warten einer Hackfrucht-Erntemaschine, umfassend mindestens zwei Pflugscharhalterungen mit abgenutzten Entwurzelungspflugscharen, umfassend die folgenden Schritte:
- Abmontieren der abgenutzten Entwurzelungspflugscharen aus den Pflugscharhalterungen ;
- Bereitstellen von mindestens zwei Ersatz-Entwurzelungspflugscharen (4), wobei jede Ersatz-Entwurzelungspflugschar eine Pflugschar nach einem der Ansprüche 1 bis 11 ist und in einem geringeren Verschleißzustand als die verschlissenen Pflugscharen ist;
- Montieren der Ersatz-Entwurzelungspflugscharen an den Pflugscharhalterungen.

## Revendications

1. Soc de récolte de culture racine, en particulier une culture de betterave,
le soc ayant un tranchant (16) pour rentrer dans le sol,
le soc comprenant :
- un corps de base, qui comprend une partie de fixation (30) conçue pour fixer le soc à un support (6) d'une machine de récolte,
- au moins une plaquette de base (20, 22, 24, 26) fixée au corps de base et formant au moins une partie du tranchant, **caractérisé en ce que** la plaquette de base (20, 22, 24, 26) a une première extrémité (50) formant une partie distante du tranchant (16) du soc, et une seconde extrémité (52) comprenant un bord de plaquette (54) s'étendant le long d'un axe du bord de plaquette (IEA) et formant au moins une partie du tranchant du soc, et **en ce que**
l'épaisseur de la plaquette, entre la première extrémité et la seconde extrémité augmente de manière continue et la seconde extrémité a une épaisseur (T2) supérieure à une épaisseur (T1) de la première extrémité.

2. Soc selon la revendication 1, dans lequel la plaquette a une section transversale de génération (GCS) prise transversalement ou perpendiculairement à l'axe du bord de plaquette, qui est généralement polygonale, en particulier trapézoïdale.

3. Soc selon la revendication 1 ou 2, dans lequel la section transversale de génération est la même sur toute la longueur (L) ou au moins sur 90 % de la longueur mesurée le long de l'axe du bord de plaquette de la plaquette et la plaquette comprend deux faces d'extrémité (64, 66), en particulier des faces d'extrémité parallèles, s'étendant transversalement à l'axe du bord de plaquette.

4. Soc de récolte de culture racine selon l'une quelconque des revendications précédentes, dans lequel
le soc présente un ensemble de plaquettes (40),
l'ensemble de plaquettes comprenant :
- au moins deux plaquettes de base (20) identiques,
- une plaquette d'extrémité amont (22) et
- une plaquette d'extrémité aval (24),
dans lequel chacune parmi la plaquette d'extrémité amont et la plaquette d'extrémité aval ayant une forme différente de la forme des plaquettes de base,
dans lequel toutes les plaquettes de l'ensemble de plaquettes, lorsqu'elles sont placées successivement les unes à côtés des autres, étant conçues pour former une surface de guidage continue (42) permettant de guider la culture racine sur un soc pour la récolte de culture racine, et dans lequel, pour former la surface de guidage, les plaquettes de base sont conçues pour être placées successivement les unes à côtés des autres, la plaquette d'extrémité amont est conçue pour être placée à une extrémité amont de la succession, et la plaquette d'extrémité aval est conçue pour être placée à une extrémité aval de la succession.

5. Soc selon la revendication 4, dans lequel
la plaquette d'extrémité amont (22) et/ou la plaquette d'extrémité aval (24), a/ont une forme trapézoïdale ou triangulaire ayant un bord en forme d'arc (70, 80).

6. Soc selon la revendication 4 ou 5, dans lequel
l'ensemble de plaquettes comprend au moins une plaquette de transition (26) ayant une forme différente de la forme de la plaquette de base, de la forme de la plaquette d'extrémité amont et de la forme de la plaquette d'extrémité aval, et dans lequel
pour former la surface de guidage, la plaquette de transition est conçue pour être agencée entre l'une quelconque des plaquettes de base et la plaquette d'extrémité amont ou entre l'une des plaquettes de base et la plaquette d'extrémité aval.

7. Soc de récolte de culture racine selon la revendication 6, dans lequel la plaquette de transition (26) a, en vue latérale, une forme essentiellement trapézoïdale.

8. Soc de récolte de culture racine selon l'une quelconque des revendications précédentes, dans lequel
le tranchant s'étend le long d'un axe du tranchant (CEA).

9. Soc de récolte de culture racine selon l'une quelconque des revendications précédentes, dans lequel
- le corps de base comprend une face de bord de corps de base (38),
- la plaquette comprend une face de bord de plaquette (62),
- la face de bord de corps de base et la face de bord de plaquette forment ensemble un profil convexe.

10. Soc selon l'une quelconque des revendications précédentes, dans lequel la plaquette ou chaque plaquette (20, 22, 24, 26) comprend une surface qui est plus dure qu'une surface du corps de base, en particulier la plaquette ou chaque plaquette ayant une dureté comprise entre 60HRC et 80HRC et de préférence entre 65HRC et 75HRC.

11. Soc selon l'une quelconque des revendications précédentes, dans lequel le corps de base comprend
une face de butée (36), la face de butée (36) étant inclinée et comprenant une section principale (361) et une section aval (362) s'étendant l'une vers l'autre selon un certain angle ;
et au moins la plaquette d'extrémité aval (24) étant adjacente à la section aval (362) et en contact avec celle-ci et au moins une plaquette de base étant adjacente à la section principale (361) et en contact avec celle-ci.

12. Procédé de fabrication d'un soc selon l'une quelconque des revendications précédentes, comprenant les étapes suivantes :
- la fourniture de la plaquette ou de chaque plaquette (20, 22, 24, 26) ;
- la fourniture du corps de base (18), et
- la fixation de la plaquette ou de chaque plaquette sur le corps de base, en particulier par brasage.

13. Procédé d'entretien d'une machine de récolte de culture racine comprenant au moins deux supports de soc avec des socs de récolte de culture racine usés, comprenant les étapes suivantes :
- le démontage des socs de récolte de culture racine usés des supports de soc ;
- la fourniture d'au moins deux socs de récolte de culture racine de remplacement (4), chaque soc de récolte de culture racine de remplacement étant un soc selon l'une quelconque des revendications 1 à 11 et étant dans un état d'usure inférieur à celui des socs usés ;
- le montage des socs de récolte de culture racine de remplacement sur les supports de soc.
